# FASCICULE DE BREVET EUROPEEN

(11) **EP 1 636 479 B1**
(45) Date de publication et mention de la délivrance du brevet: **30.10.2019**
(21) Numéro de dépôt: 04767443.7
(22) Date de dépôt: 24.06.2004
(51) Int. Cl.: F02M 31/08, F02M 31/04, F02B 29/04, F02M 26/05, F02M 26/10, F02M 26/21, F02M 26/25, F02M 26/27

(54) **PROCEDE DE REGULATION DE LA TEMPERATURE DES GAZ ADMIS DANS UN MOTEUR THERMIQUE DE VEHICULE AUTOMOBILE ET SYSTEME POUR LA MISE EN OEUVRE DE CE PROCEDE**
VERFAHREN ZUR REGULIERUNG DER TEMPERATUR DER EINGELASSENEN GASE IN EINEM WÄRMEKRAFTMOTOR EINES AUTOMOBILS UND SYSTEM ZUR DURCHFÜHRUNG DIESES VERFAHRENS
METHOD FOR REGULATING THE TEMPERATURE OF ADMITTED GASES IN A THERMAL ENGINE OF AN AUTOMOBILE AND SYSTEM FOR CARRYING OUT THIS METHOD

(30) Priorité: 25.06.2003 FR 0307673
(43) Date de publication de la demande: 22.03.2006
(73) Titulaire: VALEO SYSTEMES THERMIQUES, 78320 Le Mesnil Saint-Denis (FR)
(72) Inventeur: CHANFREAU, Mathieu, F-78650 Saulx Marchais (FR)
(86) Numéro de dépôt international: PCT/FR2004/001591
(87) Numéro de publication internationale: WO 2005/001275

(56) Documents cités:
- EP-A- 1 091 113
- EP-A1- 1 567 754
- DE-A- 19 853 455
- DE-A- 19 924 677
- DE-A- 19 924 920
- US-B1- 6 185 939
- US-B1- 6 216 458
- US-B1- 6 354 084

## Description

L'invention se rapporte aux échangeurs de chaleur pour refroidir ou réchauffer les gaz admis dans les chambres de combustion d'un moteur thermique de véhicule automobile.

Elle concerne plus particulièrement un procédé de régulation de la température des gaz admis dans un moteur thermique de véhicule automobile. Elle concerne également un système d'échange de chaleur pour la régulation thermique des gaz admis dans un moteur de véhicule automobile, comportant un module d'échange de chaleur constitué au moins d'un premier échangeur pour l'air d'admission et d'un deuxième échangeur pour les gaz d'échappement recirculés.

Les moteurs thermiques turbo-compressés, en particulier les moteurs diesel, sont alimentés par un air sous pression appelé "air de suralimentation", provenant d'un turbo compresseur actionné par les gaz d'échappement du moteur. Par suite de sa compression, cet air se trouve à une température trop élevée et il est souhaitable, pour un bon fonctionnement du moteur, de le refroidir avant son admission dans ce dernier. On utilise pour cela, de manière classique, un refroidisseur appelé refroidisseur d'air de suralimentation (en abrégé "RAS"). Ce refroidisseur a pour fonction de refroidir l'air de suralimentation par échange thermique avec un autre fluide comme l'air extérieur ou un liquide comme l'eau du circuit de refroidissement du moteur formant ainsi un échangeur du type air/air ou liquide/air.

Par ailleurs, pour obtenir un meilleur rendement du moteur et diminuer la pollution, il est connu de recirculer une partie des gaz d'échappement vers l'admission du moteur pour qu'ils soient plus complètement brûlés dans celui-ci. Mais comme ces gaz sont à une température très élevée (400 à 500°C) il est connu de les refroidir au moyen d'un autre échangeur alimenté par l'eau de refroidissement du moteur.

Enfin, il est également connu de réchauffer l'air d'alimentation du moteur lorsque sa température est trop basse, en particulier en phase de démarrage du véhicule et par température extérieure très basse et/ou en cas de régénération d'un système de post-traitement des émissions (par exemple un filtre à particules). Ce réchauffage s'effectue dans un échangeur de chaleur appelé refroidisseur d'air d'alimentation (en abrégé "RAA"). L'air d'alimentation est réchauffé le plus souvent par échange de chaleur avec l'eau du circuit de refroidissement du moteur et plus particulièrement avec l'eau du circuit à haute température lorsque le véhicule est équipé d'un circuit de refroidissement à haute température et d'un circuit de refroidissement à basse température.

Des echangeurs pour un moteur thermique de véhicule automobile sont connus, par exemple dans les documents US 6 216 458 B1 et DE 199 24 920 A.

Il existe des architectures dans lesquelles le refroidisseur d'air de suralimentation est dérivé, soit ponctuellement, soit pour assurer la montée en température du moteur en phase de démarrage à froid. Le réchauffeur d'air d'alimentation peut être monté sur cette dérivation. Il existe également des architectures dans lesquelles le refroidisseur des gaz d'échappement est dérivé pour réduire la pollution en phase de démarrage à froid.

Toutefois, ces architectures actuellement connues ne permettent pas de réguler la température de l'air d'admission. Les vannes utilisées pour répartir l'air d'admission entre le refroidisseur d'air de suralimentation et la dérivation qui le contourne, ainsi que pour répartir les gaz d'échappement recirculés entre le refroidisseur des gaz d'échappement recirculés et la dérivation de ce refroidisseur servent à réguler respectivement les débits d'air d'alimentation et des gaz recirculés, non leur température. Les échangeurs sont dimensionnés de façon à ce que, dans le pire des cas rencontrés pendant le roulage du véhicule, les températures des fluides gazeux à la sortie des échangeurs ne dépassent pas une valeur limite prédéfinie. Dans la majorité des cas, la température des gaz à l'admission du moteur est subie et non régulée. En outre, les refroidisseurs d'air d'admission refroidis à l'eau peuvent permettre, dans une certaine mesure, une régulation de la température des gaz. Mais cette régulation se fait par une régulation du débit de l'eau (régulation sur l'eau) de telle sorte que les temps de réponse sont longs.

L'invention a pour objet un procédé de régulation de la température des gaz admis dans un moteur thermique et un système d'échange de chaleur pour la mise en œuvre de ce procédé qui remédient à ces inconvénients.

Ces buts sont atteints, conformément à l'invention par le fait que l'on mélange en proportion voulue une quantité A de gaz d'admission refroidis ou réchauffés, une quantité B de gaz d'admission qui n'ont été ni refroidis ni réchauffés, une quantité C de gaz d'échappement recirculés refroidis ou réchauffés et une quantité D de gaz d'échappement recirculés qui n'ont été ni refroidis ni réchauffés, afin d'obtenir un mélange de ces gaz à une température optimale en terme de rendement et d'émissions polluantes du moteur. La proportion de chaque quantité A, B, C, D dans le mélange pouvant varier de 0 à 100%.

Le système d'échange de chaleur de l'invention comporte une première dérivation de contournement de l'échangeur d'air d'alimentation et une deuxième dérivation, commune ou non à la première dérivation, de contournement de l'échangeur des gaz d'échappement recirculés, de premiers moyens de répartition pour répartir l'air d'alimentation entre le premier échangeur et la première dérivation, de seconds moyens de répartition pour répartir les gaz recirculés entre le second échangeur et la seconde dérivation, ainsi que des moyens de commande reliés aux premiers et aux seconds moyens de répartition pour ajuster la proportion des gaz d'admission refroidis ou réchauffés, des gaz d'admission qui n'ont été ni refroidis ni réchauffés, des gaz d'échappement recirculés refroidis et des gaz d'échappement recirculés qui n'ont été ni refroidis ni réchauffés, selon une loi prédéfinie.

La température de ces gaz s'échelonne entre un maximum et un minimum. Les gaz les plus chauds sont les gaz d'échappement recirculés qui n'ont pas été- refroidis. Leur température est de 300°C à 500°C environ. Après refroidissement, leur température est abaissée jusqu'à 20°C - 300°C environ. A sa sortie du compresseur de suralimentation, l'air d'alimentation est à une température d'environ 200°C à 250°C maximum. Après avoir été refroidi dans le refroidisseur d'air de suralimentation, l'air d'alimentation est à une température de 20°C à 70°C environ. Ces chiffres sont bien évidemment indicatifs. Ils dépendent de paramètres divers, tels que le taux de compression de l'air et les dimensionnements du refroidisseur d'air de suralimentation et des gaz recirculés.

Pour augmenter la température du mélange constitué des quatre flux gazeux énumérés ci-dessus, les moyens de commande agissent sur les moyens de répartition de l'air d'alimentation et des gaz recirculés afin d'augmenter la proportion des gaz dont la température est la plus élevée, à savoir les gaz d'échappement non refroidis et l'air de suralimentation non refroidi. Au contraire, si l'on souhaite diminuer la température du mélange, les moyens de commande agissent en sens inverse de manière à augmenter, dans le mélange, la proportion des gaz dont la température est la plus basse, à savoir l'air d'alimentation refroidi et les gaz recirculés refroidis. On peut ainsi, grâce à cette régulation "sur l'air", faire varier la température finale du mélange admis dans les chambres de combustion du moteur entre une température maximale et une température minimale et l'ajuster en permanence, selon une loi prédéfinie, de manière à obtenir le meilleur rendement du moteur dans toutes ses conditions de fonctionnement, ainsi que des rejets polluants réduits au minimum.

Dans un premier mode de réalisation, le premier et le second échangeurs sont constitués par des échangeurs distincts. Ce mode de réalisation est avantageux parce que l'air d'alimentation et les gaz d'échappement recirculés sont refroidis par des échangeurs distincts, de telle sorte que l'échangeur d'air d'alimentation n'est pas encrassé par les suies contenues dans les gaz d'échappement et n'est pas corrodé par les gaz d'échappement.

Le premier et le second échangeurs peuvent comporter un collecteur de sortie commun. Dans ce cas, l'air d'alimentation et les gaz recirculés sont mélangés après la sortie des collecteurs du premier et du second échangeurs.

En variante de réalisation, le premier et le second échangeurs comportent un collecteur de sortie commun. Le mélange de l'air d'alimentation et des gaz d'échappement recirculés s'effectue alors directement dans ce collecteur commun.

Avantageusement, la première et la seconde dérivation débouchent directement dans le collecteur commun au premier et au second échangeurs.

Selon un deuxième mode de réalisation, le premier et le second échangeurs sont confondus en un échangeur unique. L'air d'alimentation et les gaz d'échappement recirculés sont introduits dans cet échangeur unique. Leur mélange se fait donc avant l'entrée dans l'échangeur ou au moment de leur entrée dans l'échangeur. Ce mode de réalisation est plus simple. Toutefois, il comporte un risque d'encrassement par les suies des gaz d'échappement recirculés.

La première et la seconde dérivation peuvent être intégrées au module d'échange de chaleur.

La première et la seconde dérivation peuvent également être confondues en une dérivation unique.

L'utilisation d'une dérivation unique présente l'avantage de refroidir les gaz d'échappement recirculés en les mélangeant avec l'air frais d'alimentation dont la température est plus basse, comme on l'a rappelé précédemment. Ainsi la température du mélange des gaz qui arrivent dans la boîte collectrice du refroidisseur d'air de suralimentation est plus basse, ce qui peut permettre l'utilisation de matières plastiques pour sa réalisation. En revanche, la partie de la canalisation de dérivation des gaz d'échappement recirculés et le raccord sur la dérivation de l'air du refroidisseur d'air de suralimentation doivent être dans un matériau qui doit tenir à une température plus élevée, par exemple en acier inoxydable.

Il est avantageux que le système de l'invention comprenne au moins une vanne proportionnelle, par exemple de type papillon ou à organe rotatif, pour gérer à la fois le débit d'air d'admission et le débit des gaz d'échappement recirculés, ainsi que la température d'admission.

Dans un mode de réalisation particulier le système de l'invention comporte un échangeur additionnel' situé en aval du module d'échange de chaleur par rapport au sens de circulation de l'air d'alimentation et des gaz recirculés.

Cet échangeur additionnel permet un refroidissement complémentaire du mélange de l'air d'alimentation et des gaz recirculés. Dans ce cas, le module d'échange de chaleur, qu'il soit constitué de deux échangeurs distincts ou d'un seul échangeur, constitue un pré-refroidisseur.

Dans un mode de réalisation particulier, l'échangeur additionnel est refroidi à l'air.

De préférence, une dérivation est montée aux bornes de l'échangeur additionnel et des moyens de répartition, par exemple une vanne de répartition, permet de répartir en proportion voulue l'air d'admission entre l'échangeur additionnel et la dérivation qui le contourne. Dans l'échangeur additionnel, il ne passe que de l'air en cas de fortes charges du moteur, sans gaz d'échappement recirculés.

Enfin, on peut prévoir une vanne d'isolation, située en aval de l'échangeur additionnel, afin de l'isoler complètement de la dérivation.

Dans le système d'échange de chaleur de l'invention, le premier échangeur de chaleur pour l'air d'alimentation peut fonctionner de deux manières différentes. Dans un premier cas, lorsque l'air d'alimentation est comprimé, le premier échangeur peut être utilisé comme refroidisseur d'air de suralimentation afin d'abaisser la température de cet air. Dans un autre cas, en particulier lorsque l'air d'alimentation n'est pas comprimé, le premier échangeur est utilisé, non comme refroidisseur, mais comme réchauffeur afin de réchauffer l'air d'admission préalablement à son admission dans le moteur. Ce mode de fonctionnement est utile, comme on l'a dit, en phase de démarrage du moteur ou en cas de température extérieure très basse ou lors de la régénération d'un filtre à particules, par exemple.

Des caractéristiques complémentaires, alternatives ou optionnelles, de l'invention sont énumérées ci-après :
- une vanne de débit d'air permet de régler le débit des gaz recirculés qui arrivent au module d'échange de chaleur ;
- le second échangeur est entouré par le premier échangeur ;
- la tubulure d'entrée du second échangeur de chaleur comporte des moyens de refroidissement à air ou à eau, par exemple des ailettes de refroidissement ;
- les ailettes de refroidissement sont refroidies par une circulation d'air d'admission ;
- les ailettes de refroidissement sont refroidies par une circulation d'eau ;
- les moyens de répartition de l'air d'admission et des gaz d'échappement recirculés sont constitués par des volets ;
- les moyens de commande commandent la vanne de débit ;
- le premier échangeur de chaleur est réalisé en aluminium et le second échangeur de chaleur en acier inoxydable ;
- le premier échangeur de chaleur et le second échangeur de chaleur sont réalisés en aluminium.

D'autres caractéristiques et avantages de l'invention apparaîtront encore à la lecture de la description qui suit d'exemples de réalisation donnés à titre illustratif en référence aux figures annexées. Sur ces figures :
- la figure 1 est une représentation d'un premier mode de réalisation d'un système d'échange de chaleur conforme à l'invention ;
- la figure 2 est une représentation du système d'échange de chaleur raccordé à une variante du circuit de refroidissement de la figure 1 ;
- la figure 3 est une représentation d'une variante de réalisation du système de refroidissement des figures 1 et 2 ;
- la figure 4 est une représentation d'une troisième variante de réalisation du système de l'invention raccordé à un circuit de refroidissement à basse température ;
- la figure 5 illustre le raccordement du système de la figure 4 à un circuit d'eau à basse température ou à haute température ;
- la figure 6 est une représentation d'un système conforme à l'invention comportant un refroidisseur additionnel en aval du module d'échange de chaleur ;
- la figure 7 représente un système de refroidissement identique au système de la figure 6 raccordé à un circuit de refroidissement à haute ou à basse température ;
- la figure 8 représente un système d'échange de chaleur comportant un module d'échange de chaleur constitué d'un échangeur unique et d'un refroidisseur du mélange gazeux situé en aval du module d'échange de chaleur ;
- la figure 9 représente une variante de réalisation du système d'échange de chaleur de la figure 8 ;
- la figure 10 représente des courbes de comparaison ; et
- les figures 11 et 12 représentent deux systèmes d'échange de chaleur qui constituent respectivement des variantes des systèmes des figures 1 et 2.

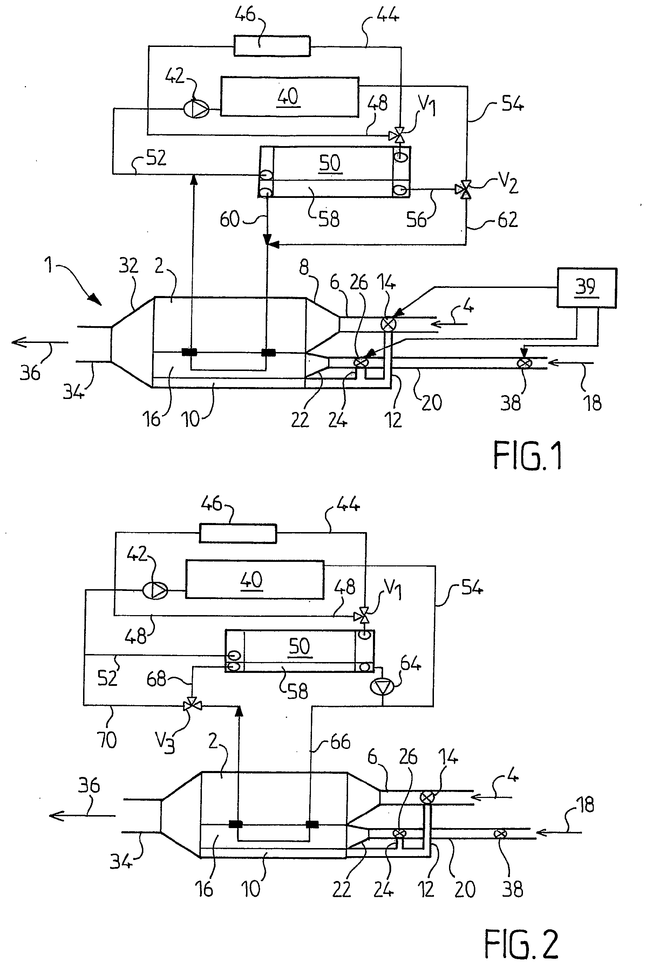

Sur la figure 1, le système d'échange de chaleur de l'invention est constitué par un module d'échange de chaleur désigné par la référence générale 1. Le module d'échange de chaleur 1 comprend un premier échangeur de chaleur 2. Cet échangeur est destiné à l'air d'alimentation (également appelé "air d'admission"). Comme schématisé par la flèche 4, l'air d'admission parvient par l'intermédiaire d'une canalisation d'entrée 6 jusqu'au collecteur d'entrée 8 de l'échangeur 2. Une dérivation 10 permet de contourner l'échangeur 2. Dans l'exemple représenté, la dérivation 10 est intégrée au module d'échange de chaleur. Toutefois, en variante, la dérivation 10 pourrait être extérieure au module d'échange de chaleur 1. Un conduit de dérivation 12 relie la canalisation d'entrée 6 et la dérivation 10. Des moyens de répartition, constitués dans l'exemple par une vanne de répartition 14, permet de répartir l'air d'alimentation entre la canalisation d'entrée 6 et le conduit de dérivation 12.

D'autre part, le module d'échange de chaleur 1 comporte un deuxième échangeur désigné par la référence 16, destiné aux gaz d'échappement recirculés. Comme schématisé par la flèche 18, les gaz d'échappement recirculés arrivent par l'intermédiaire d'une canalisation d'entrée 20 jusqu'au collecteur d'admission 22, également appelé collecteur d'entrée ou boîte d'entrée, de l'échangeur 16. Un conduit de dérivation 24 relie la canalisation d'entrée 20 au conduit de dérivation 12 de l'air d'admission 4. Ainsi, les gaz d'échappement recirculés peuvent emprunter la dérivation 10, à l'instar de l'air d'alimentation. La section de la dérivation 10 est inférieure ou égale à la section de la conduite d'arrivée d'air 6 de l'échangeur 2.

Des moyens de répartition, constitués dans l'exemple par une vanne de répartition 26, permettent de répartir les gaz d'échappement recirculés entre l'échangeur 16 et le passage de dérivation 10. Les vannes 14 et 26 sont de préférence des vannes proportionnelles, par exemple de type papillon ou à organe rotatif. Elles permettent de gérer à la fois le débit d'air d'admission et le débit des gaz d'échappement recirculés, ainsi que la température d'admission. On remarque que dans l'exemple représenté sur la figure 1, il existe une dérivation 10 commune à l'air d'admission et aux gaz d'échappement recirculés. Toutefois, il est entendu que dans une variante de réalisation, on pourrait prévoir une dérivation particulière pour les gaz d'échappement et l'air d'admission.

Le module d'échange de chaleur 1 comporte un collecteur de sortie 32, également appelé boîte de sortie. Dans l'exemple représenté, le collecteur de sortie 32 est commun à l'échangeur 2 et à l'échangeur 16. Toutefois, en variante de réalisation, chaque échangeur pourrait posséder son propre collecteur de sortie. L'air d'admission et les gaz d'échappement recirculés, qui ont circulé indépendamment l'un de l'autre dans l'échangeur 2 et dans l'échangeur 16, se mélangent dans le collecteur de sortie 32 avant d'être dirigés par une ou plusieurs canalisations 34 vers l'admission du moteur comme schématisé par la flèche 36.

Le module d'échange de chaleur 1 qui vient d'être décrit est raccordé au circuit de refroidissement du moteur 40 du véhicule automobile. Ce circuit de refroidissement comprend une pompe principale 42, généralement mécanique, qui fait circuler l'eau du circuit de refroidissement à travers le moteur 40. Après avoir traversé le moteur, l'eau peut emprunter une dérivation 44 sur laquelle est monté un radiateur de chauffage 46, également appelé aérotherme, qui permet de chauffer l'habitacle du véhicule automobile. L'eau qui sort du moteur 40 peut également emprunter une canalisation de dérivation 48 qui permet de ramener l'eau jusqu'à la pompe de circulation 42 sans refroidissement.

Par ailleurs, l'eau qui sort du moteur peut être refroidie dans un refroidisseur à haute température 50, qui constitue le refroidisseur principal du véhicule. A sa sortie du radiateur de refroidissement 50, l'eau refroidie est ramenée vers la pompe de circulation 42 par la canalisation 52. Une vanne à trois voies V₁ permet de répartir l'eau entre la canalisation de dérivation 48 et le radiateur de refroidissement 50 en fonction de la température de l'eau à la sortie du moteur 40.

Le circuit de refroidissement du moteur comporte encore une autre canalisation, désignée par la référence 54 qui permet d'amener l'eau chaude qui quitte le moteur 40 vers une deuxième vanne à trois voies désignée par la référence V₂. Une conduite 56 raccordée à l'une des voies de la vanne V₂ permet d'amener l'eau chaude jusqu'à un radiateur à basse température 58. L'eau peut être ainsi refroidie à une température plus basse que dans le radiateur à haute température 50. A sa sortie du radiateur à basse température, l'eau refroidie peut être acheminée par l'intermédiaire de la conduite 60 jusqu'au module d'échange de chaleur 1.

En variante, l'eau chaude qui sort du moteur 40 par la canalisation 54 peut être acheminée par une canalisation 62 raccordée à la vanne à trois voies V₂ jusqu'au module d'échange de chaleur sans avoir traversé le radiateur à basse température 58, en d'autre terme sans avoir été refroidie. L'eau qui circule par la canalisation 52 est donc à la même température que l'eau qui sort du moteur, c'est à dire une température proche de 100°C.

Le radiateur 2 peut être utilisé selon deux modes. Dans un premier mode, il est utilisé pour refroidir l'air 4. C'est le cas, en particulier, lorsque cet air a été échauffé par compression dans un compresseur. L'échangeur 2 est alors utilisé comme radiateur d'air de suralimentation. Dans ce cas, l'échangeur 2 est alimenté en eau froide ayant circulé dans l'échangeur à basse température 58 et dans la canalisation 60. Dans un second mode de fonctionnement, l'échangeur 2 est utilisé au contraire pour réchauffer l'air d'alimentation du moteur. Dans ce cas, il agit comme réchauffeur et non comme refroidisseur. Il est alors alimenté en eau chaude sortant directement du moteur 40 par la canalisation 62, sans avoir été refroidie.

Quel que soit le mode de fonctionnement de l'échangeur 2, l'échangeur 16 est toujours utilisé comme refroidisseur. En effet, la température des gaz d'échappement recirculés est très élevée (400°C à 500°C) de telle sorte que ces derniers doivent toujours être refroidis. Ce refroidissement est effectué soit à partir de l'eau à basse température ayant traversé l'échangeur 58, soit à partir de l'eau à haute température provenant directement de la canalisation 62. Dans chacun de ces deux cas, la température de l'eau est de toute façon largement inférieure à la température des gaz d'échappement.

A la sortie des échangeurs 2 et 16, l'air de suralimentation refroidi ou l'air d'alimentation réchauffé se mélangent aux gaz d'échappement recirculés refroidis, ainsi qu'à l'air frais non refroidi et aux gaz d'échappement recirculés non refroidis qui transitent ensemble par la dérivation 10. Ceci présente l'avantage de refroidir les gaz recirculés en les mélangeant à l'air d'admission 4. Ainsi, lorsqu'ils parviennent dans le collecteur de sortie commun 32, leur température est plus basse, de telle sorte que la boîte collectrice du module d'échange de chaleur peut être réalisée en un matériau économique tel que le plastique. En revanche, le conduit de dérivation 24, ainsi que la partie du conduit de dérivation 12 située en aval du conduit 24 doivent être réalisés dans un matériau noble capable de résister à une température élevée, l'acier inoxydable, par exemple.

En outre, le système d'échange de chaleur représenté sur la figure 1 comporte des moyens pour régler le débit des gaz d'échappement recirculés. Une fraction des gaz d'échappement est en effet rejetée directement à l'atmosphère, tandis que l'autre partie est recirculée. Dans l'exemple, une vanne de débit 38 permet de régler ce débit à une valeur voulue.

Une unité de commande 39, par exemple une unité de commande électronique, permet de commander les moyens de répartition 14 de l'air d'admission, les moyens de répartition 26 des gaz recirculés, ainsi que la vanne de débit 38. Cette commande est faite de manière à obtenir une température de sortie du mélange d'air d'admission et de gaz recirculés parvenant dans le moteur à une température optimale permettant d'obtenir les meilleures performances du moteur et une pollution réduite. Cette commande est effectuée selon des paramètres et une loi de variation et qui peuvent être intégrés dans une mémoire et une logique de calcul faisant partie de l'unité de commande 39.

Le module d'échange de chaleur 1 représenté sur la figure 2 est identique à celui de la figure 1. Il ne sera, par conséquent, pas décrit à nouveau. L'exemple de la figure 2 se distingue de la figure 1 par la présence d'une pompe additionnelle 64 dans le circuit de refroidissement à basse température du moteur 40.

Dans le mode de refroidissement de l'échangeur 2 en réchauffeur d'air d'alimentation, l'eau chaude quitte le moteur 40 par la canalisation 54 puis parvient, par la canalisation 66, jusqu'à l'échangeur 2 qui joue ainsi le rôle de réchauffeur de l'air d'admission. Après avoir circulé dans l'échangeur 2 et dans l'échangeur 16, l'eau à haute température parvient jusqu'à la vanne à trois voies V₃ qui la ramène, par l'intermédiaire de la conduite 70 jusqu'à la pompe principale de circulation 42. On remarque que, dans ce mode de fonctionnement, la pompe additionnelle 64, généralement une pompe électrique, n'est pas actionnée.

Dans le mode de fonctionnement de l'échangeur 2 comme refroidisseur d'air de suralimentation, la pompe additionnelle 64 fait circuler l'eau dans la canalisation 66. Cette eau traverse successivement l'échangeur 2 et l'échangeur 16 avant de revenir par la canalisation 68 jusqu'au refroidisseur à basse température 58. Les échangeurs 2 et 16 sont ainsi alimentés en eau à basse température. On détermine ainsi deux circuits de circulation séparée pour l'eau de refroidissement, un circuit à haute température et un circuit à basse température. Dans le circuit à haute température, l'eau, entraînée par la pompe principale, circule à travers l'échangeur à haute température 50 puis regagne l'entrée de la pompe principale par la canalisation 52.

La pompe électrique 64 peut avantageusement être commandée par les moyens de commande 39, en même temps que les vannes V₁, V₂ et V₃ et les vannes de répartition 14, 26 ainsi que la vanne de débit 38.

De préférence, dans les variantes de réalisation des figures 1 et 2, le radiateur 2 est réalisé en aluminium et le refroidisseur 16 des gaz d'échappement recirculés est en acier inoxydable en raison de la température élevée de ces gaz.

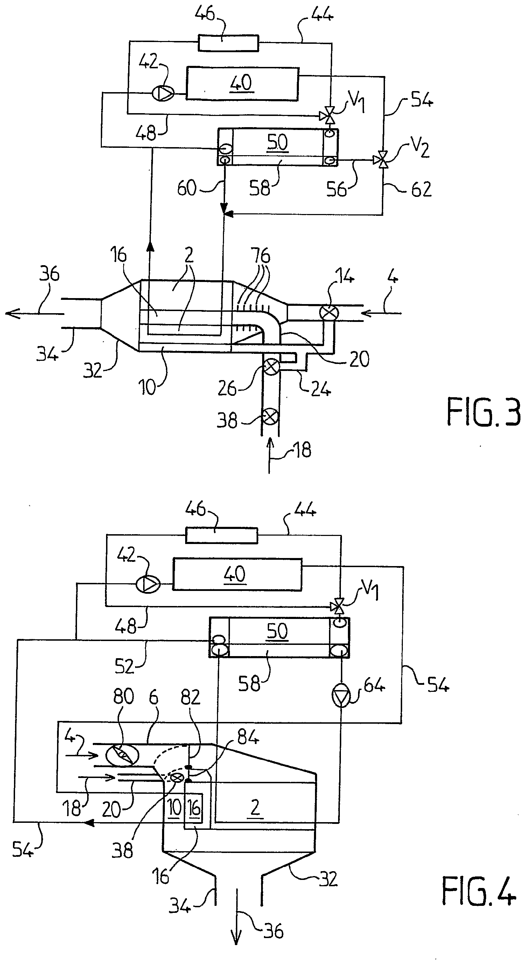

On a représenté sur la figure 3 une variante de réalisation du module d'échange de chaleur 1 des figures 1 et 2. Dans ce mode de réalisation, le premier échangeur 2 et le second échangeur 16 sont distincts l'un de l'autre mais le premier échangeur 2 peut être traversé par le second échangeur 16. De cette manière, un échange de chaleur complémentaire entre le premier et le second échangeur a lieu. Plus précisément, les gaz d'échappement recirculés peuvent être refroidis au contact du courant d'air d'alimentation 4. Comme dans l'exemple précédent, la conduite d'amenée de l'air d'admission 6 est en matière plastique ou en aluminium, alors que l'échangeur 2 est réalisé en aluminium. La canalisation 20 d'amenée des gaz d'échappement recirculés est au contraire en acier inoxydable pour pouvoir résister à la température élevée de ces gaz.

En outre, des ailettes de refroidissement 76 sont prévues à la périphérie de la canalisation 20 d'amenée des gaz recirculés. Les ailettes 76 peuvent être refroidies par les gaz d'admission frais et comprimés ou non, dont la température est largement inférieure à celle des gaz d'échappement. En variante de réalisation, les ailettes 76 peuvent être refroidies par l'eau du circuit de refroidissement du moteur en même temps que les échangeurs 2 et 16. Comme dans l'exemple de réalisation précédent, la dérivation 10 est commune aux gaz d'admission frais et aux gaz recirculés. Le conduit de dérivation 24 qui raccorde la conduite d'amenée 20 au conduit de dérivation 12 de l'air d'admission est réalisé en acier inoxydable.

Au contraire, le conduit de dérivation 12 de l'air d'admission peut être réalisé en aluminium ou en matière plastique. Ce mode de réalisation comporte, comme précédemment, une vanne 14 de répartition de l'air d'admission entre l'échangeur 2 et la dérivation 10, et une vanne de répartition 26 pour répartir les gaz recirculés entre la dérivation 10 et l'échangeur de refroidissement 16. En outre, une vanne de débit 38 permet de régler le débit des gaz recirculés admis jusqu'au module d'échange de chaleur 1. La vanne de débit 38 et la vanne de répartition 26 peuvent être réalisées séparément, comme dans l'exemple représenté. Ces deux vannes peuvent également être intégrées en une vanne unique.

Comme décrit précédemment, l'échangeur 2 peut fonctionner soit comme refroidisseur d'air de suralimentation, soit comme réchauffeur de l'air d'admission en fonction de la température de l'air d'admission et de la température extérieure. En outre, il peut également être raccordé à un circuit de refroidissement du moteur comportant une pompe électrique additionnelle comme exposé précédemment. Cette variante, en touts points identique, ne sera donc pas décrite à nouveau.

On a représenté sur la figure 4 une quatrième variante de réalisation d'un système d'échangeur de chaleur conforme à l'invention. Dans ce mode de réalisation, les circuits de refroidissement à haute température et à basse température sont séparés l'un de l'autre. Dans le circuit de refroidissement à haute température, l'eau à haute température parvient par la conduite ou canalisation 54 jusqu'à l'échangeur 16 qu'elle traverse, avant de circuler à nouveau à travers le radiateur de refroidissement à haute température 50 et le moteur 40. Dans le circuit de refroidissement à basse température, l'eau de refroidissement entraînée par la pompe additionnelle 64 passe par la canalisation 78 avant de regagner l'entrée du radiateur 58 à basse température.

Dans l'exemple de la figure 4, l'échangeur 2 fonctionne exclusivement comme refroidisseur de l'air de suralimentation. Un clapet papillon 80, disposé dans la conduite d'amenée d'air d'admission 6 permet de créer une dépression qui permet un réglage du débit des gaz d'échappement recirculés. Les moyens de répartition sont constitués dans cet exemple par un volet de répartition 82 qui répartit l'air d'admission entre le refroidisseur d'air de suralimentation 2 et la dérivation 10.

L'échangeur 16 fonctionne à la fois comme refroidisseur des gaz d'échappement recirculés et comme réchauffeur de l'air d'alimentation, le cas échéant, c'est à dire en cas de besoin, par exemple lorsque la température extérieure est faible ou en phase de démarrage du moteur. Les seconds moyens de répartition sont constitués par un clapet 84 qui répartit les gaz d'échappement recirculés et l'air d'admission à réchauffer entre la dérivation 10 et l'échangeur 16. Les clapets 82 et 84 jouent le même rôle que les vannes de répartition 14 et 26 décrites dans les exemples précédents. Après avoir traversé l'échangeur 2 et l'échangeur 16, l'air de suralimentation, les gaz recirculés et l'air d'admission réchauffé le cas échéant se mélangent dans le collecteur commun 32 du module d'échange de chaleur 1. Ils sont ensuite admis dans les chambres de combustion du moteur par la ou les tubulures 34, comme schématisé par la flèche 36.

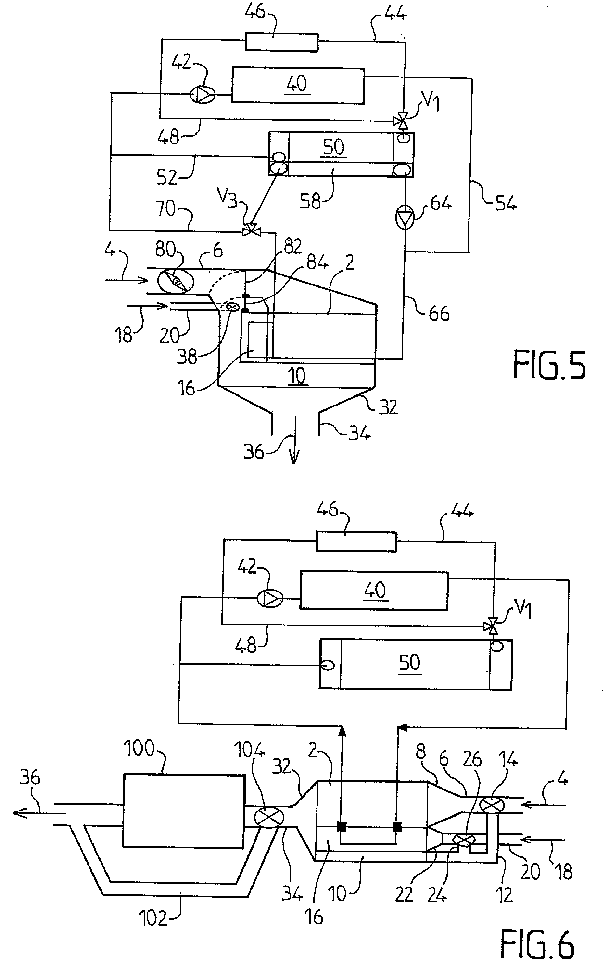

On a représenté sur la figure 5 une variante de réalisation du système d'échange de chaleur de la figure 4. Dans cette variante, les circuits à haute température et à basse température, ne sont pas séparés, comme dans l'exemple de la figure 4. Le schéma de circulation des fluides à haute température et à basse température est identique à celui qui a été décrit en référence à la figure 2. L'eau à haute température ou à basse température peut circuler en parallèle ou en série dans l'échangeur 2 et dans l'échangeur 16, comme dans l'exemple de la figure 2 (ou encore en parallèle) comme représenté sur la figure 5. Comme décrit précédemment, l'échangeur 2 peut fonctionner en tant que refroidisseur d'air de suralimentation. Dans ce cas, il est alimenté en eau à basse température. Il peut aussi fonctionner en tant que réchauffeur de l'air d'admission. Dans ce cas, il est alimenté en eau à haute température. En revanche, l'échangeur 16 fonctionne toujours en tant que refroidisseur des gaz d'échappement recirculés. Il est alimenté en eau à haute température ou en eau à basse température.

Sur la figure 4 et également sur la figure 5, une vanne de débit 38 permet de régler le débit des gaz d'échappement recirculés admis dans le système d'échange de chaleur 1.

On a représenté sur la figure 6 une sixième variante de réalisation d'un système d'échange de chaleur conforme à l'invention. Il se distingue des réalisations précédentes par le fait qu'il comporte, outre le module d'échange de chaleur 1, un échangeur de chaleur additionnel désigné par la référence 100. L'échangeur additionnel 100 est situé, par rapport au sens de l'écoulement de l'air d'admission et des gaz d'échappement recirculés, en aval du module d'échange de chaleur 1. Il est par conséquent raccordé à la canalisation 34 par laquelle le mélange de l'air d'admission et des gaz recirculés quittent le module d'échange 1.

L'échangeur 100 permet d'effectuer un refroidissement complémentaire de l'air seul. Dans l'exemple représenté, il est refroidi par un courant d'air extérieur, au même titre que le radiateur de refroidissement principal du véhicule 50. Une dérivation 102 permet au mélange gazeux d'air d'admission et de gaz d'échappement de contourner le radiateur de refroidissement additionnel 100. Une vanne de répartition 104 permet de régler la proportion d'air qui circule à travers l'échangeur additionnel 100 et dans la canalisation de dérivation 102. Comme dans les réalisations précédentes, la vanne de répartition 104 peut être commandée par l'unité de commande 39 (voir figure 1).

Le module d'échange de chaleur 1 est identique à celui qui a été décrit en référence aux figures 1 et 2. Sa description ne sera donc pas reprise ici. Comme précédemment, le premier échangeur 2 peut fonctionner soit comme refroidisseur de l'air de suralimentation, soit comme réchauffeur de l'air d'admission. Dans le premier cas, il constitue un pré-refroidisseur (également appelé "pre-cooler"- terme anglo-saxon). Un refroidissement complémentaire est alors effectué dans le radiateur additionnel 100. Dans un second mode de fonctionnement, le premier échangeur de chaleur 2 réchauffe l'air d'alimentation. Dans ce cas, il va de soi que l'air ne doit pas être refroidi par la suite. Il contourne donc l'échangeur additionnel 100 par la canalisation de dérivation 102.

On remarquera en outre, que dans cet exemple, le circuit de refroidissement du moteur 40 comporte seulement un radiateur de refroidissement à haute température 50. Il n'y a pas, comme dans les exemples représentés sur les figures 1 à 5, de refroidisseur à basse température. En conséquence, l'échangeur 2 et l'échangeur 16 sont toujours alimentés en eau à haute température.

Dans cette réalisation, l'échangeur 2 est de préférence réalisé en aluminium et l'échangeur 16 en acier inoxydable. L'échangeur additionnel 16 peut sans inconvénient être réalisé en aluminium, la température des gaz d'échappement recirculés ayant été abaissée par leur mélange avec l'air d'admission.

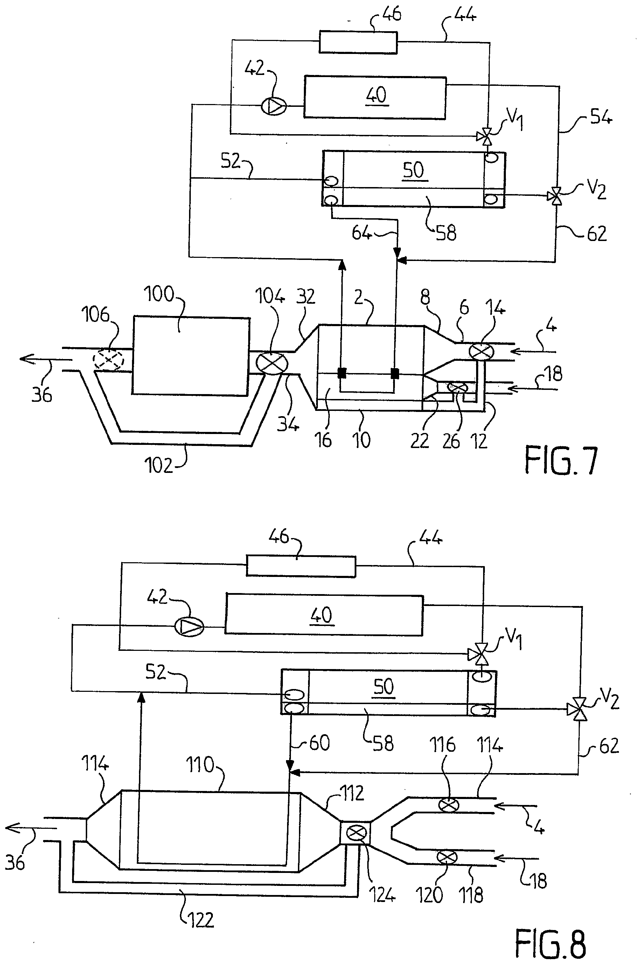

On a représenté sur la figure 7 une variante de réalisation du système d'échange de chaleur de la figure 6. Il est constitué également, d'un module d'échange de chaleur 1 et d'un refroidisseur additionnel 100 situé en aval du module 1. Il se distingue seulement du système de la figure 6 par la présence optionnelle d'une vanne d'isolation 106 qui permet d'isoler totalement le volume du refroidisseur additionnel 100 du mélange gazeux d'air d'admission et de gaz d'échappement. En outre, dans l'exemple représenté, le module d'échange de chaleur 1 est relié à un circuit de refroidissement du moteur comprenant un radiateur à haute température 50 et un radiateur à basse température 58 identique à celui qui a été décrit en référence à la figure 1. Ce circuit de refroidissement, qui permet les deux modes de fonctionnement de l'échangeur 2 déjà décrits, ne sera pas exposé à nouveau.

On a représenté sur la figure 8 un deuxième mode de réalisation de l'invention. Dans cet exemple, le premier et le second échangeur, au lieu d'être constitués par des échangeurs distincts comme dans les exemples de réalisation précédemment décrits, sont constitués par un échangeur unique désigné par la référence 110. L'échangeur 110 présente un collecteur d'admission 112 et un collecteur de sortie 114 communs à l'air d'admission et aux gaz d'échappement recirculés. L'air d'admission est amené par une canalisation d'amenée 114 sur laquelle se trouve une vanne de réglage de débit 116 et les gaz d'échappement recirculés sont amenés par une canalisation d'amenée 118 sur laquelle on trouve une vanne de débit 120. Les canalisations 114 et 118 se rejoignent de sorte que l'air d'admission et les gaz recirculés se mélangent préalablement à leur entrée dans l'échangeur 110. Ce dernier peut être contourné par une dérivation 122. Une vanne de répartition 124 permet de répartir le mélange d'air d'admission et des gaz recirculés qui traversent l'échangeur 110 et la dérivation 122.

Cette solution ne peut être envisagée que si les gaz recirculés ont été préalablement déchargés des suies et des particules qu'ils contiennent. A cet effet, on peut prévoir un piège à particules qui permet d'éviter l'encrassement de l'échangeur 110. Ce mode de réalisation présente alors l'avantage d'abaisser la température du mélange gazeux préalablement à son admission dans l'échangeur 110, ce qui favorise l'utilisation d'un métal moins coûteux résistant moins à la température tel que l'aluminium.

Bien entendu, l'échangeur peut également être réalisé en acier inoxydable si on le souhaite. Comme dans les exemples de réalisation précédents, les vannes de réglages de débit 116 et 120, ainsi que la vanne de répartition 124 peuvent être commandées par un système de commande 39 afin de réguler, selon une loi définie, les proportions d'air et de gaz recirculés dans le mélange final admis dans les chambres de combustion du moteur afin d'atteindre une température optimum pour ce mélange.

Le circuit de refroidissement du moteur auquel le système d'échange de chaleur de la figure 8 est raccordé est ici encore identique à celui de la figure 1. Il comprend un radiateur à haute température 50 et un radiateur à basse température 58 qui permettent de faire fonctionner l'échangeur 110 selon deux modes, selon qu'il est traversé par l'eau à haute température ou l'eau à basse température. Lorsque l'échangeur 110 est traversé par l'eau à basse température, il fonctionne comme refroidisseur de l'air de suralimentation par rapport à l'air d'admission et comme refroidisseur des gaz d'échappement recirculés en ce qui concerne les gaz d'échappement. Au contraire, lorsque l'échangeur 110 est traversé par de l'eau à haute température, il fonctionne comme réchauffeur de l'air d'admission ou du mélange d'air d'admission et des gaz d'échappement recirculés. En outre, la chaleur des gaz d'échappement recirculés favorise l'échauffement de l'air d'admission froid.

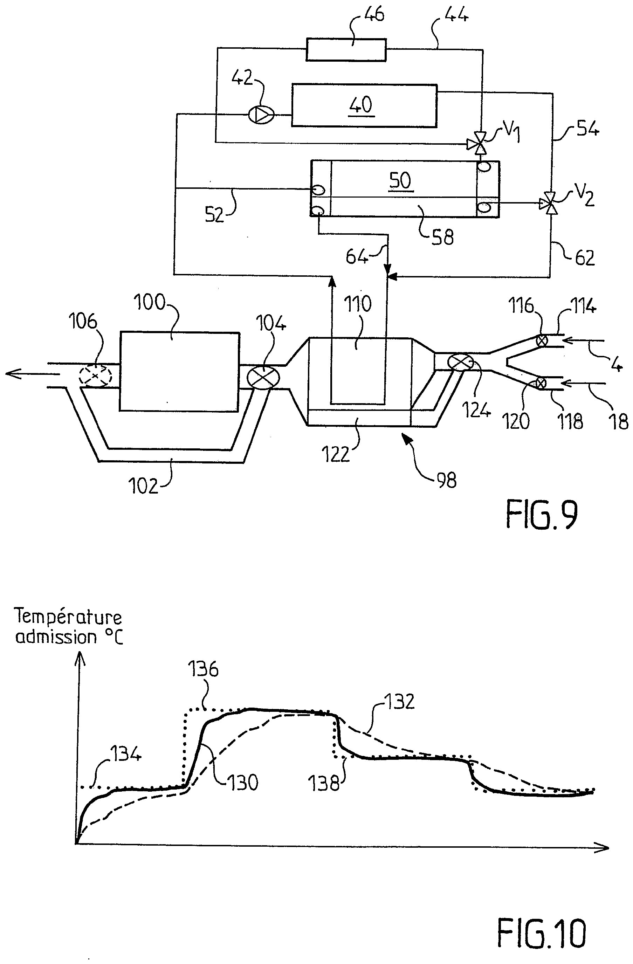

On a représenté sur la figure 9 une variante de réalisation du système d'échange de chaleur de la figure 8. La réalisation du module d'échange de chaleur 98 est identique, à l'exception du fait que la dérivation 122 est intégrée à ce module. Toutefois, un échangeur additionnel 100 est disposé en aval, par rapport au sens de l'écoulement de l'air et des gaz d'échappement, du module d'échange de chaleur 98. La réalisation de l'échangeur additionnel 100 est identique à celle de l'échangeur additionnel qui a été décrit en référence aux figures 6 et 7. Il peut comporter une vanne optionnelle d'isolation 106 pour isoler l'échangeur 100. Il est contourné par une dérivation 102. Une vanne de répartition 104 permet de répartir l'air d'admission ou le mélange d'air d'admission et de gaz d'échappement recirculés entre l'échangeur et la dérivation.

Le module d'échange de chaleur 98, comme celui de la figure 8, est raccordé à un circuit de refroidissement du moteur 40 qui peut fonctionner selon deux modes. Le fonctionnement de ces deux modes ne sera donc pas exposé à nouveau.

La figure 10 est une courbe qui permet une comparaison entre le mode de régulation de la température des gaz admis dans les chambres de combustion du moteur 40 au moyen d'une régulation sur l'air (courbe en traits pleins désignée par la référence 130) et une régulation sur l'eau (courbe en traits tiretés désignée par la référence 132). On a désigné par les références 134, 136 et 138 trois consignes de température différentes. Comme la figure 10 le montre, la régulation sur l'air permet de suivre beaucoup plus rapidement la consigne de température que la régulation sur l'eau.

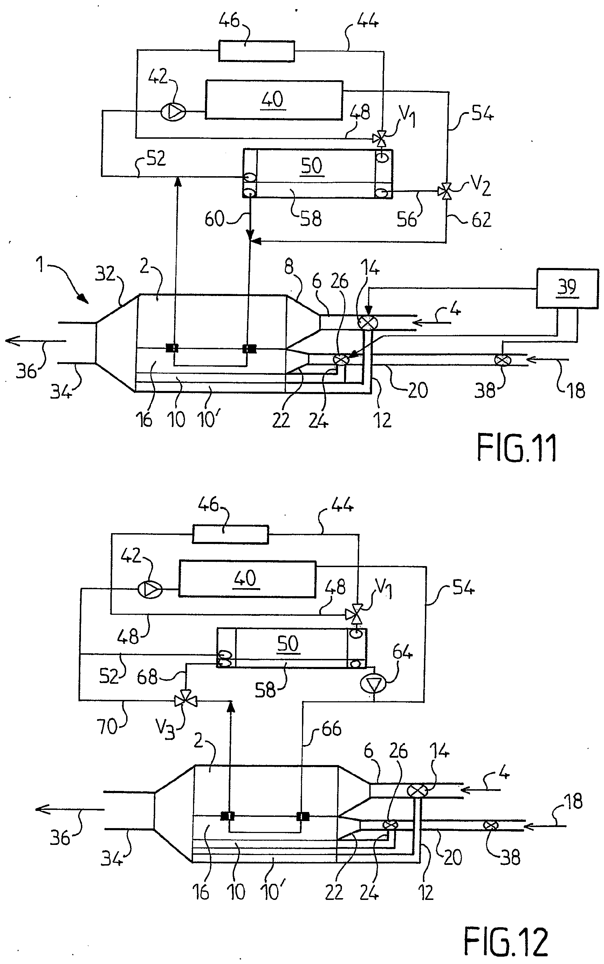

Les figures 11 et 12 illustrent respectivement des variantes de réalisation des systèmes des figures 1 et 2. Les éléments communs sont désignés par les mêmes références numériques. La seule différence réside dans le fait que, dans les deux cas, le système comprend une dérivation 10 pour les gaz d'échappement et une dérivation 10' pour l'air d'admission.

## Revendications

1. Système d'échange de chaleur pour la régulation thermique des gaz admis dans un moteur thermique de véhicule automobile, comportant un module d'échange de chaleur constitué au moins d'un premier échangeur (2) pour l'air d'admission, d'un deuxième échangeur (16) pour les gaz d'échappement recirculés, comportant une première dérivation (10) de contournement de l'échangeur (2) pour l'air d'admission et une deuxième dérivation (10, 10'), commune ou non à la première dérivation, de contournement de l'échangeur (16) des gaz recirculés, de premiers moyens (14) pour répartir l'air d'admission entre l'échangeur (2) et la première dérivation (10), de seconds moyens de répartition (26) pour répartir les gaz recirculés entre l'échangeur (16) et la deuxième dérivation (10), et des moyens de commande (29) reliés aux premiers et aux seconds moyens de répartition (14 ; 26) pour ajuster la proportion des gaz d'admission refroidis ou réchauffés, des gaz d'admission qui n'ont été ni refroidis ni réchauffés, des gaz d'échappement recirculés refroidis et des gaz d'échappement recirculés qui n'ont été ni refroidis ni réchauffés, selon une loi prédéfinie et dans lequel le premier et le second échangeurs (2, 16) sont constitués par des échangeurs distincts, la première et la seconde dérivation (10) sont confondues en une dérivation unique.

2. Système d'échange de chaleur selon la revendication 1, **caractérisé en ce que** le premier et le second échangeurs de chaleur (2, 16) comportent un collecteur de sortie commun (32) .

3. Système d'échange de chaleur selon la revendication précédente, **caractérisé en ce que** la première et la seconde dérivation (10) débouchent dans le collecteur commun (32) au premier et au second échangeur.

4. Système d'échange de chaleur selon l'une des revendications précédentes, **caractérisé en ce que** la première et la seconde dérivations (10) sont intégrées au module d'échange de chaleur (1).

5. Système d'échange de chaleur selon l'une des revendications précédentes, **caractérisé en ce qu'**il comporte en outre au moins une vanne proportionnelle (14 ; 26), par exemple de type papillon ou à organe rotatif, pour gérer à la fois le débit d'air d'admission et le débit des gaz d'échappement recirculés, ainsi que la température d'admission.

6. Système d'échange de chaleur selon l'une des revendications précédentes, **caractérisé en ce qu'**il comporte en outre un échangeur additionnel (100) situé en aval du module d'échange de chaleur (1) par rapport au sens de circulation de l'air d'admission et des gaz recirculés.

7. Système d'échange de chaleur selon la revendication précédente, **caractérisé en ce que** l'échangeur additionnel (100) est refroidi à l'air.

8. Système d'échange de chaleur selon l'une des revendications 6 et 7, **caractérisé en ce qu'**une dérivation (102) est montée aux bornes de l'échangeur additionnel (100), des moyens de répartition (104) permettant de répartir en proportion voulue l'air d'admission entre l'échangeur additionnel (100) et la dérivation (102).

9. Système d'échange de chaleur selon l'une des revendications 6 à 8, **caractérisé en ce qu'**il comporte en outre une vanne d'isolation (106) permettant l'isolation du volume de l'échangeur additionnel (100).

10. Système d'échange de chaleur selon l'une des revendications précédentes, **caractérisé en ce que** le premier échangeur (2) est un refroidisseur d'air de suralimentation.

11. Système d'échange de chaleur selon l'une des revendications 1 à 9, **caractérisé en ce que** le premier échangeur (2) est un réchauffeur d'air d'admission.

12. Système d'échange de chaleur selon l'une des revendications précédentes, **caractérisé en ce qu'**une vanne de débit (38) permet de régler le débit des gaz recirculés qui arrivent au module d'échange de chaleur (1).

13. Système d'échange de chaleur selon l'une des revendications précédentes, **caractérisé en ce que** le second échangeur (16) est entouré par le premier échangeur (2).

14. Système d'échange de chaleur selon la revendication précédente, **caractérisé en ce que** la tubulure d'entrée (20) du second échangeur de chaleur (16) comporte des moyens de refroidissement à air ou à eau, par exemple des ailettes de refroidissement (76).

15. Système d'échange de chaleur selon la revendication précédente, **caractérisé en ce que** les ailettes de refroidissement (76) sont refroidies par une circulation d'air d'admission.

16. Système d'échange de chaleur selon la revendication 14, **caractérisé en ce que** les ailettes de refroidissement (76) sont refroidies par une circulation d'eau.

17. Système d'échange de chaleur selon l'une des revendications précédentes, **caractérisé en ce que** les moyens de répartition de l'air d'admission et des gaz d'échappement recirculés sont constitués par des volets (82, 84).

18. Système d'échange de chaleur selon l'une des revendications 12 à 17, **caractérisé en ce que** les moyens de commande (39) commandent la vanne de débit (38).

19. Système d'échange de chaleur selon l'une des revendications précédentes, **caractérisé en ce que** le premier échangeur de chaleur (2) est réalisé en aluminium et le second échangeur de chaleur (16) en acier inoxydable.

20. Système d'échange de chaleur selon l'une des revendications 1 à 18, **caractérisé en ce que** le premier échangeur de chaleur (2) et le second échangeur de chaleur (16) sont réalisés en aluminium.

## Patentansprüche

1. Wärmeaustauschsystem zur thermischen Regulierung der in einen Kraftfahrzeug-Verbrennungsmotor angesaugten Gase, das ein Wärmeaustauschmodul aufweist, das aus mindestens einem ersten Austauscher (2) für die Ansaugluft besteht, einem zweiten Austauscher (16) für die rückgeführten Abgase, der eine erste Nebenleitung (10) zur Umgehung des Austauschers (2) für die Ansaugluft aufweist und eine zweite Nebenleitung (10, 10'), gemeinsam oder nicht mit der ersten Nebenleitung, zur Umgehung des Austauschers (16) der rückgeführten Abgase, erste Mittel (14) zum Aufteilen der Ansaugluft zwischen dem Austauscher (2) und der ersten Nebenleitung (10), zweite Aufteilungsmittel (26) zum Aufteilen der rückgeführten Abgase zwischen dem Austauscher (16) und der zweiten Nebenleitung (10) und Steuerungsmittel (29), die mit den ersten und zweiten Aufteilungsmitteln (14; 26) verbunden sind, um das Verhältnis der gekühlten oder aufgewärmten Ansauggase, der Ansauggase, die weder gekühlt noch aufgewärmt wurden, der gekühlten zurückgeführten Abgase und der zurückgeführten Abgase, die weder gekühlt noch aufgewärmt wurden, gemäß einem vorher definierten Gesetz einzustellen, und in dem der erste und der zweite Austauscher (2, 16) aus verschiedenen Austauschern bestehen, wobei die erste und die zweite Nebenleitung (10) in einer einzigen Nebenleitung zusammengenommen sind.

2. Wärmeaustauschsystem nach Anspruch 1, **dadurch gekennzeichnet, dass** der erste und der zweite Wärmeaustauscher (2, 16) einen gemeinsamen Auslasssammler aufweisen (32).

3. Wärmeaustauschsystem nach dem vorausgehenden Anspruch, **dadurch gekennzeichnet, dass** die erste und die zweite Nebenleitung (10) in den gemeinsamen Sammler (32) für den ersten und den zweiten Austauscher führen.

4. Wärmeaustauschsystem nach einem der vorausgehenden Ansprüche, **dadurch gekennzeichnet, dass** die erste und die zweite Nebenleitung (10) in das Wärmeaustauschmodul (1) integriert sind.

5. Wärmeaustauschsystem nach einem der vorausgehenden Ansprüche, **dadurch gekennzeichnet, dass** es darüber hinaus mindestens ein Proportionalventil (14; 26) aufweist, zum Beispiel vom Typ Klappenventil oder mit drehbarem Organ, um gleichzeitig die Menge der Ansaugluft und die Menge der rückgeführten Abgase zu steuern sowie die Ansaugtemperatur.

6. Wärmeaustauschsystem nach einem der vorausgehenden Ansprüche, **dadurch gekennzeichnet, dass** es darüber hinaus mindestens einen zusätzlichen Austauscher (100) aufweist, der dem Wärmeaustauschmodul (1) hinsichtlich der Umlaufrichtung der Ansaugluft und der rückgeführten Abgase nachgeschaltet ist.

7. Wärmeaustauschsystem nach dem vorausgehenden Anspruch, **dadurch gekennzeichnet, dass** der zusätzliche Austauscher (100) mit Luft gekühlt wird.

8. Wärmeaustauschsystem nach einem der Ansprüche 6 und 7, **dadurch gekennzeichnet, dass** eine Nebenleitung (102) an den Anschlüssen des zusätzlichen Austauschers (100) angebracht ist, wobei die Aufteilungsmittel (104) ermöglichen, die Ansaugluft in einem gewünschten Verhältnis zwischen dem zusätzlichen Austauscher (100) und der Nebenleitung (102) aufzuteilen.

9. Wärmeaustauschsystem nach einem der Ansprüche 6 bis 8, **dadurch gekennzeichnet, dass** es darüber hinaus ein Absperrventil (106) aufweist, das das Absperren des Volumens des zusätzlichen Austauschers (100) ermöglicht.

10. Wärmeaustauschsystem nach einem der vorausgehenden Ansprüche, **dadurch gekennzeichnet, dass** der erste Austauscher (2) ein Ladeluftkühler ist.

11. Wärmeaustauschsystem nach einem der Ansprüche 1 bis 9, **dadurch gekennzeichnet, dass** der erste Austauscher (2) ein Ansaugluftvorwärmer ist.

12. Wärmeaustauschsystem nach einem der vorausgehenden Ansprüche, **dadurch gekennzeichnet, dass** ein Durchflussventil (38) ermöglicht, die Menge der rückgeführten Abgase zu regeln, die am Wärmeaustauschmodul (1) eintreffen.

13. Wärmeaustauschsystem nach einem der vorausgehenden Ansprüche, **dadurch gekennzeichnet, dass** der zweite Austauscher (16) von dem ersten Austauscher (2) umgeben ist.

14. Wärmeaustauschsystem nach einem der vorausgehenden Ansprüche, **dadurch gekennzeichnet, dass** das Eingangsrohr (20) des zweiten Wärmeaustauschers (16) Mittel zum Kühlen per Luft oder per Wasser aufweist, wie zum Beispiel Kühlrippen (76).

15. Wärmeaustauschsystem nach dem vorausgehenden Anspruch, **dadurch gekennzeichnet, dass** die Kühlrippen (76) über einen Ansaugluftumlauf gekühlt werden.

16. Wärmeaustauschsystem nach Anspruch 14, **dadurch gekennzeichnet, dass** die Kühlrippen (76) über einen Wasserumlauf gekühlt werden.

17. Wärmeaustauschsystem nach dem vorausgehenden Anspruch, **dadurch gekennzeichnet, dass** die Aufteilungsmittel für die Ansaugluft und die zurückgeführten Abgase aus Klappen (82, 84) bestehen.

18. Wärmeaustauschsystem nach einem der Ansprüche 12 bis 17, **dadurch gekennzeichnet, dass** die Steuerungsmittel (39) das Durchflussventil (38) steuern.

19. Wärmeaustauschsystem nach einem der vorausgehenden Ansprüche, **dadurch gekennzeichnet, dass** der erste Wärmeaustauscher (2) aus Aluminium gefertigt ist und der zweite Wärmeaustauscher (16) aus Edelstahl.

20. Wärmeaustauschsystem nach einem der Ansprüche 1 bis 18, **dadurch gekennzeichnet, dass** der erste Wärmeaustauscher (2) und der zweite Wärmeaustauscher (16) aus Aluminium gefertigt sind.

## Claims

1. Heat exchange system for the thermal regulation of the gases admitted to a motor vehicle combustion engine, comprising a heat exchange module consisting of at least a first heat exchanger (2) for the intake air, a second exchanger (16) for the recirculated exhaust gases, comprising a first bypass (10) for bypassing the exchanger (2) for the intake air and a second bypass (10, 10'), which may or may not be common to the first bypass, for bypassing the exchanger (16) for the recirculated gases, first means (14) for distributing the intake air between the exchanger (2) and the first bypass (10), second distribution means (26) for distributing the recirculated gases between the exchanger (16) and the second bypass (10), and control means (29) connected to the first and second distribution means (14; 26) to adjust the proportion of the intake gases cooled or heated, of the intake gases which have been neither cooled nor heated, of the recirculated exhaust gases which have been cooled and of the recirculated exhaust gases which have been neither cooled nor heated, according to a predefined law and in which the first and second exchangers (2, 16) consist of separate exchangers, the first and second bypasses (10) are combined into a single bypass.

2. Heat exchange system according to Claim 1, **characterized in that** the first and second heat exchangers (2, 16) comprise a common outlet manifold (32) .

3. Heat exchange system according to the preceding claim, **characterized in that** the first and second bypasses (10) open into the manifold (32) common to the first and second exchangers.

4. Heat exchange system according to one of the preceding claims, **characterized in that** the first and second bypasses (10) are incorporated into the heat exchange module (1).

5. Heat exchange system according to one of the preceding claims, **characterized in that** it further comprises at least one proportional valve (14; 26), for example of the butterfly or rotary shutter type, for managing both the intake air flow rate and the flow rate of the recirculated exhaust gases, together with the intake temperature.

6. Heat exchange system according to one of the preceding claims, **characterized in that** it further comprises an additional exchanger (100) situated downstream of the heat exchange module (1) with respect to the direction in which the intake air and the recirculated gases flow.

7. Heat exchange system according to the preceding claim, **characterized in that** the additional exchanger (100) is air-cooled.

8. Heat exchange system according to either of Claims 6 and 7, **characterized in that** a bypass (102) is mounted at the terminals of the additional exchanger (100), distribution means (104) allowing the intake air to be distributed in the desired proportions between the additional exchanger (100) and the bypass (102).

9. Heat exchange system according to one of Claims 6 to 8, **characterized in that** it further comprises a shut-off valve (106) to isolate the volume of the additional exchanger (100).

10. Heat exchange system according to one of the preceding claims, **characterized in that** the first exchanger (2) is a charge air cooler.

11. Heat exchange system according to one of Claims 1 to 9, **characterized in that** the first exchanger (2) is an intake air heater.

12. Heat exchange system according to one of the preceding claims, **characterized in that** a flow control valve (38) allows the flow rate of recirculated gases arriving at the heat exchange module (1) to be regulated.

13. Heat exchange system according to one of the preceding claims, **characterized in that** the second exchanger (16) is surrounded by the first exchanger (2) .

14. Heat exchange system according to the preceding claim, **characterized in that** the inlet pipe (20) to the second heat exchanger (16) comprises air-cooling or water-cooling means, for example cooling fins (76).

15. Heat exchange system according to the preceding claim, **characterized in that** the cooling fins (76) are cooled by a flow of intake air.

16. Heat exchange system according to Claim 14, **characterized in that** the cooling fins (76) are cooled by a flow of water.

17. Heat exchange system according to one of the preceding claims, **characterized in that** the means for distributing the intake air and the recirculated exhaust gases consist of shutters (82, 84).

18. Heat exchange system according to one of Claims 12 to 17, **characterized in that** the control means (39) control the flow control valve (38).

19. Heat exchange system according to one of the preceding claims, **characterized in that** the first heat exchanger (2) is made of aluminium and the second heat exchanger (16) is made of stainless steel.

20. Heat exchange system according to one of Claims 1 to 18, **characterized in that** the first heat exchanger (2) and the second heat exchanger (16) are made of aluminium.
